Europäisches Patentamt

European Patent Office

Office européen des brevets

(19)

(11) Numéro de publication : **0 311 530 B1**

(12)

# FASCICULE DE BREVET EUROPEEN

(45) Date de publication du fascicule du brevet :
**04.12.91 Bulletin 91/49**

(51) Int. Cl.⁵ : **D01G 11/00**

(21) Numéro de dépôt : **88420319.1**

(22) Date de dépôt : **22.09.88**

(54) **Machine effilocheuse de grande largeur, notamment pour l'industrie textile.**

(30) Priorité : 06.10.87 FR 8714150

(43) Date de publication de la demande :
**12.04.89 Bulletin 89/15**

(45) Mention de la délivrance du brevet :
**04.12.91 Bulletin 91/49**

(84) Etats contractants désignés :
**DE ES GB IT**

(56) Documents cités :
**DE-A- 2 400 312
DE-A- 2 605 328
DE-C- 501 431
FR-A- 492 198
GB-A- 2 018 316
GB-A- 2 124 264
GB-A- 2 142 351**

(73) Titulaire : **CONSTRUCTIONS MECANIQUES F.
LAROCHE & FILS
Rue de Thizy
F-69470 Cours La Ville (FR)**

(72) Inventeur : **Laroche, Robert
Rue de Thizy
F-69470 Cours La Ville (FR)**
Inventeur : **Morel, André
La Croix Dumont
F-69470 Cours La Ville (FR)**

(74) Mandataire : **Arbousse-Bastide, Jean-Claude
Philippe
Cabinet Maisonnier 28 rue Servient
F-69003 Lyon (FR)**

## Description

La présente invention est relative à une machine effilocheuse du type de celles qu'on utilise dans l'industrie textile.

Une machine de ce type est connue, par exemple, par le brevet français 2283247. Cette machine connue comprend un poste d'alimentation qui reçoit divers déchets textiles, et les présente à un tambour d'effilochage à pointes, qui défibre la matière. Les fibres ainsi obtenues sont alors évacuées sous la forme d'une nappe fibreuse qui constitue une matière première noble, pour diverses fabrications ultérieures.

Une telle défibreuse de type connu présente la particularité d'être réalisée suivant une largeur relativement faible, par exemple de l'ordre de 80 cms à 140 cms. L'alimentation est assurée manuellement par un opérateur qui enfourne les déchets textiles sur le tapis alimentaire.

En pratique, il serait avantageux de pouvoir réaliser une telle effilocheuse suivant une beaucoup plus grande largeur (par exemple de l'ordre de deux mètres). Cela reste toutefois impossible à réaliser avec les technologies connues précitées. En effet, d'une part, une telle largeur est beaucoup plus importante que l'envergure d'un homme chargé d'assurer l'alimentation. D'autre part, la nappe fibreuse obtenue à la sortie présenterait, sur une aussi grande largeur, d'importantes irrégularités, aussi bien en épaisseur qu'en densité.

La présente invention a pour but d'éviter ces inconvénients, en réalisant une machine effilocheuse de grande largeur, par exemple de l'ordre de 2 mètres, voire davantage.

Une machine effilocheuse selon l'invention présente un tambour rotatif à pointes s'étendant sur toute la largeur de la machine, et elle est caractérisée en ce que l'alimentation du tambour effilocheur est assurée par une poste à fonctionnement automatique, comprenant une cheminée verticale, recevant les déchets à ouvrir, et dans laquelle ces déchets sont maintenus à la hauteur d'un niveau sensiblement constant, cependant que l'une au moins des parois de la cheminée entre lesquelles descendent les déchets, est réalisée suivant un montage vibrant.

Suivant une autre caractéristique de l'invention, la paroi vibrante de la cheminée d'alimentation s'étend sur sensiblement toute la largeur de la machine, et elle effectue des battements dont l'amplitude et la fréquence sont réglables.

Suivant une autre caractéristique de l'invention, les parois transversales et sensiblement verticales de la cheminée d'alimentation sont toutes deux réalisées sous forme vibrante.

Suivant une autre caractéristique de l'invention, l'une au moins de ces parois vibrantes comporte des perforations qui la rendent perméable à l'air, ce qui permet d'y recycler les déchets fibreux récupérés plus en aval dans la machine et acheminés par transport pneumatique.

Suivant une autre caractéristique de l'invention, le transport pneumatique qui assure le recyclage des déchets et récupération, possède un séparateur centrifuge à la partie inférieure duquel sont recueillis les déchets durs et lourds, alors que de sa partie supérieure, un flux d'air achemine vers la partie supérieure de la cheminée alimentaire, l'ensemble des fibres légères utilisables.

Suivant une autre caractéristique de l'invention, la machine comporte, en aval du tambour rotatif à pointes, une bande transporteuse à perforations multiples, sous laquelle est prévue, sur toute la largeur de la nappe, une trémie d'aspiration dont l'espace intérieur est fractionné en plusieurs compartiments d'aspiration répartis suivant la largeur de la machine. Cette disposition permet d'assurer, sur toute la largeur de la machine, l'homogénéité de la nappe des fibres ainsi produits, aussi bien en épaisseur qu'en densité.

Suivant une autre caractéristique de l'invention, la machine comporte, au-dessus du tambour rotatif à pointes, une passerelle transversale, le long de laquelle peut se déplacer, dans un sens et dans l'autre, un mécanisme d'affûtage constitué par une affûteur à meule rotatative en forme de boisseau, pour affûter les dents du tambour sur toute la longueur de celui-ci.

Suivant une autre caractéristique de l'invention, la machine est réalisée sous une forme modulaire, c'est-à-dire que la nappe des fibres circule en traversant successivement plusieurs modules, dont chacun comporte un cylindre effilocheur et ses accessoires précités.

Suivant une autre caractéristique de l'invention, la machine réalisée sous forme modulaire comporte deux chemins de roulement longitudinaux, sur lesquels peut se déplacer la traverse d'affûtage, si bien que celle-ci peut être amenée successivement au-dessus de chacun des tambours rotatifs à pointes, dont elle assure l'affûtage.

Le dessin annexé, donné à titre d'exemple non limitatif, permettra de mieux comprendre les caractéristique de l'invention, et les avantages qu'elle est susceptible de procurer.

Figure 1 est une vue d'ensemble d'une machine selon l'invention, constituée par la juxtaposition de trois modules successifs.

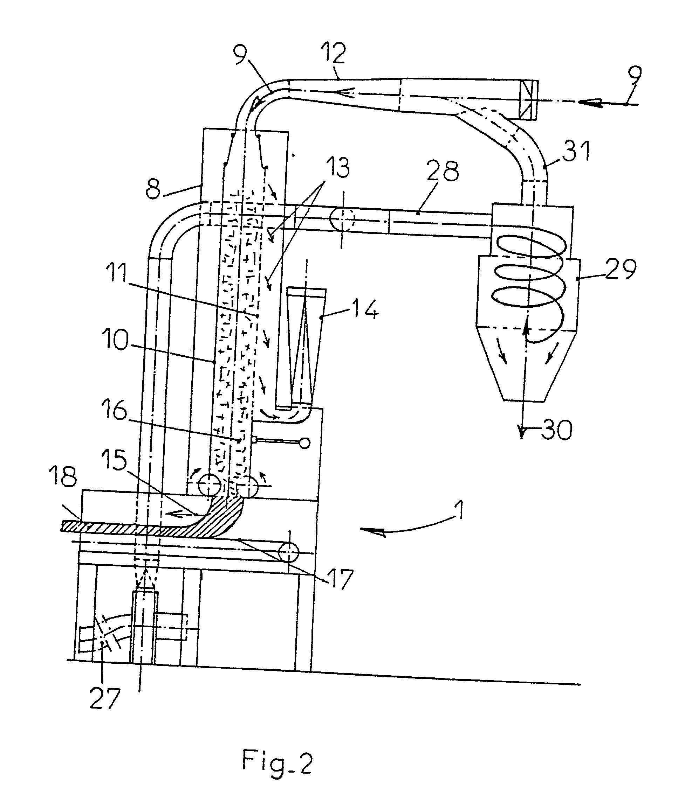

Figure 2 est une coupe longitudinale, montrant, à plus grande échelle, le détail du poste alimentaire.

Figure 3 est une coupe longitudinale montrant les organes qui présentent les déchets textiles au tambour défibreur.

Figure 4 est une coupe longitudinale d'un des modules, montrant notamment le dispositif de nappage, situé en aval du tambour défibreur.

Figure 5 est une vue suivant la direction de la flèche V (figure 4).

Figure 6 est une vue analogue à la figure 4, après ouverture du capot qui équipe la partie supérieure du tambour à pointes.

Figure 7 est une coupe suivant VII-VII (figure 4), montrant le détail de la trémie d' aspiration compartimentée.

Figure 8 est une vue suivant la direction de la flèche VIII (figure 6), quand le tambour est en position pour recevoir la traverse d'affûtage.

Figure 9 est une vue schématique suivant la direction de la flèche IX (figure 1), montrant la structure modulaire de l'ensemble de la machine.

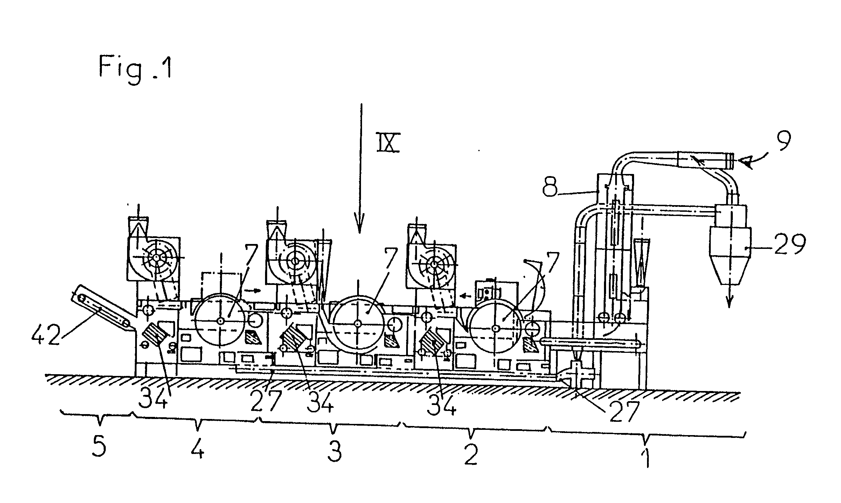

La machine illustrée sur les dessins comporte un poste d'alimentation automatique 1 (figure 1), suivi de plusieurs modules 2, 3, 4, identiques entre eux. A la sortie, un poste d'évacuation 5 évacue une nappe de fibres, homogène à la fois en épaisseur et en densité sur toute la largeur de la machine.

Cette largeur 6 utile est pratiquement égale à la longeur axiale du tambour effilocheur 7 de chaque module 2, 3, 4. Elle peut être très grande, par exemple égale à plusieurs mètres.

Le poste d'alimentation automatique 1 comprend une cheminée verticale 8, par le haut de laquelle sont déversés (flèche 9), les déchets textiles à ouvrir.

La cheminée 8 s'étend sur toute la largeur 6 de la machine. A l'intérieure, elle comprend deux parois vibrantes 10 et 11, sensiblement verticales, entre lesquelles une canalisation de transport pneumatique 12 déverse des déchets à ouvrir. La paroi vibrante 11 est préférablement réalisée sous une forme perforée, si bien qu'elle laisse échapper l'air du transport pneumatique 12 (flèches 13), sous l'aspirations d'un extracteur 14, cependant que les déchets fournis par le transport pneumatique 31 sont réceptionnés au bas de la cheminée 8 (flèche 15), en même temps que les fibres récupérées, déversées suivant la flèche 9.

Grâce à cette disposition, les fibres et déchets qui tombent sur un convoyeur alimentaire 17 forment une nappe sensiblement uniforme sur toute la largeur de la machine. Ils sont acheminés (flèche 15) vers le tambour à pointes du premier module 2. Pour cela, la nappe 18 en question parvient, à la manière connue, entre un rouleau alimentaire 19, et une auge de retenue 20. Cette dernière peut être réalisée suivant une structure monobloc sur toute la largeur de la machine, sous une forme fractionnée, c'est-à-dire constituée par la juxtaposition de plusieurs pédales de même profil. Après ouverture par les pointes du tambour rotatif 7, une tôle déflectrice 21, fixe mais réglable, sépare les matières en deux courants, à savoir :

— des fibres textiles légères convenablement ouvertes, qui circulent suivant la direction indiquée par la flèche 22 ;

— des déchets solides, ou des déchets insuffisamment ouverts 23, qui tombent sur le clapet horizontal 24 d'un sas à boisseau. Ce clapet 24 s'étend sur toute la largeur de la machine, et on le fait tourner périodiquement (par exemple toutes les dix secondes), suivant un angle de 180°, autour de son axe transversal horizontal 25. Au-dessous du clapet horizontal 24, se trouve une auge réceptrice fixe 26, qui est soumise en permanence à une aspiration renvoyant les déchets solides dans une gaine de transport pneumatique 27, s'étendant sous toute la longueur de la machine (figure 1). A sa partie arrière, la gaine 27 est renvoyée vers une canalisation 28, située à la partie supérieure du poste d'alimentation 1. Cette canalisation 28 débouche tangentiellement dans la cuve d'un séparateur centrifuge 29. A la partie inférieure de cette cuve, on récupère (flèche 30), les déchets durs et lourds. Au contraire, à la partie supérieure du séparateur 29, les fibres réutilisables sont prélevées par une canalisation 31 qui les recycle vers la canalisation 12 de l'alimentation.

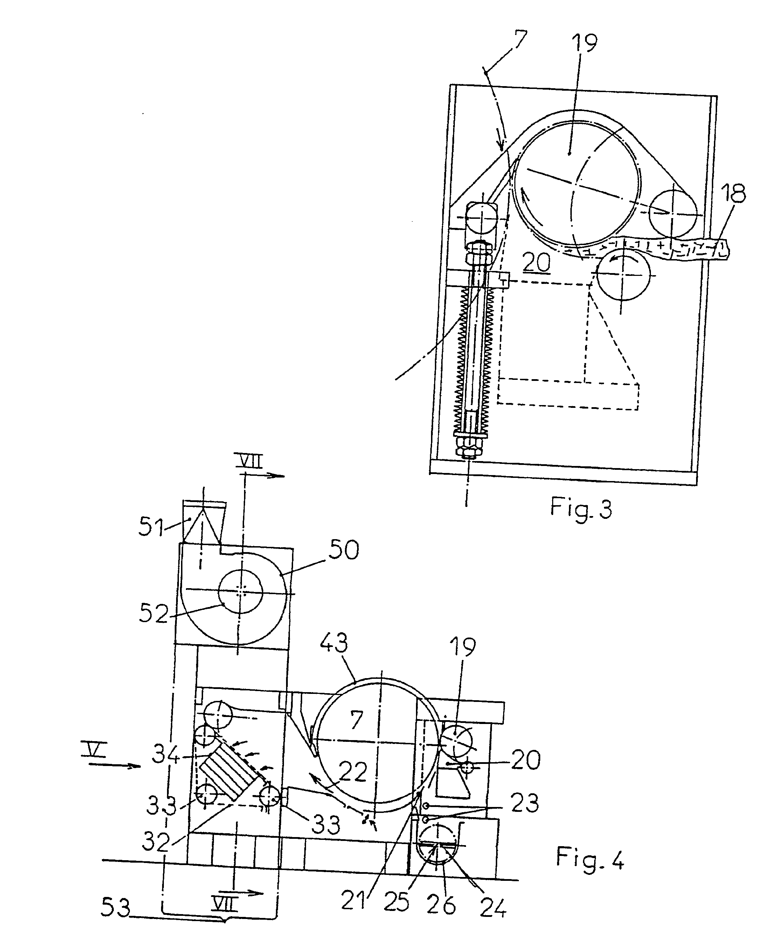

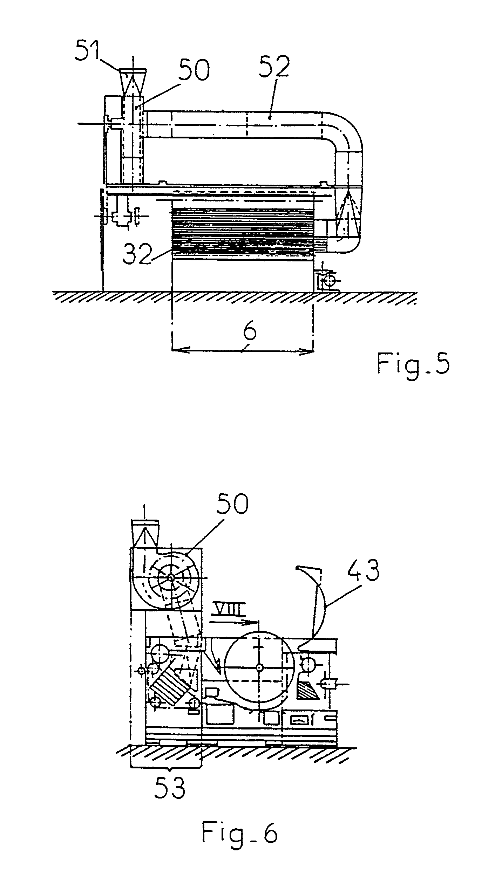

En aval de chaque tambour 7, les fibres 22 tombent sur une bande transporteuse perforée 32 (figures 4 et 5), qui circule sans fin sur des rouleaux 33. Sous cette bande transporteuse 32, est prévue, sur toute la largeur de la machine, une trémie d' aspiration fixe 34, qui présente la particularité d'être fractionnée en plusieurs compartiments tels que 35, 36, 37, 38, 39, disposés les une à côté des autres sur toute la largeur 6 de la machine. Tous ces compartiments sont reliés à une aspiration latérale commune 40, que maintient donc en dépression l'espace intérieur de la trémie 34 et, par conséquent, de la bande transporteuse perforée 32. Grâce à cette disposition, les fibres acheminées suivant la direction de la flèche 22 forment, sur cette bande transporteuse 32, une nappe fibreuse 41, dont l'homogénéité reste satisfaisante sur toute la largeur 6 de la machine, aussi bien en ce qui concerne l'épaisseur que la densité.

La nappe 41 est ensuite envoyée vers le ou les modules suivants, tels que 3, 4, jusqu'à ce que, finalement, à la sortie de la machine, le poste d' évacuation 5 fournisse, sur son tapis d'évacuation 42 (figure 1), une nappe de fibres, ayant toute la qualité désirée et une homogénéité parfaite sur l'entière largeur de la machine, même si cette largeur est égale à plusieurs mètres.

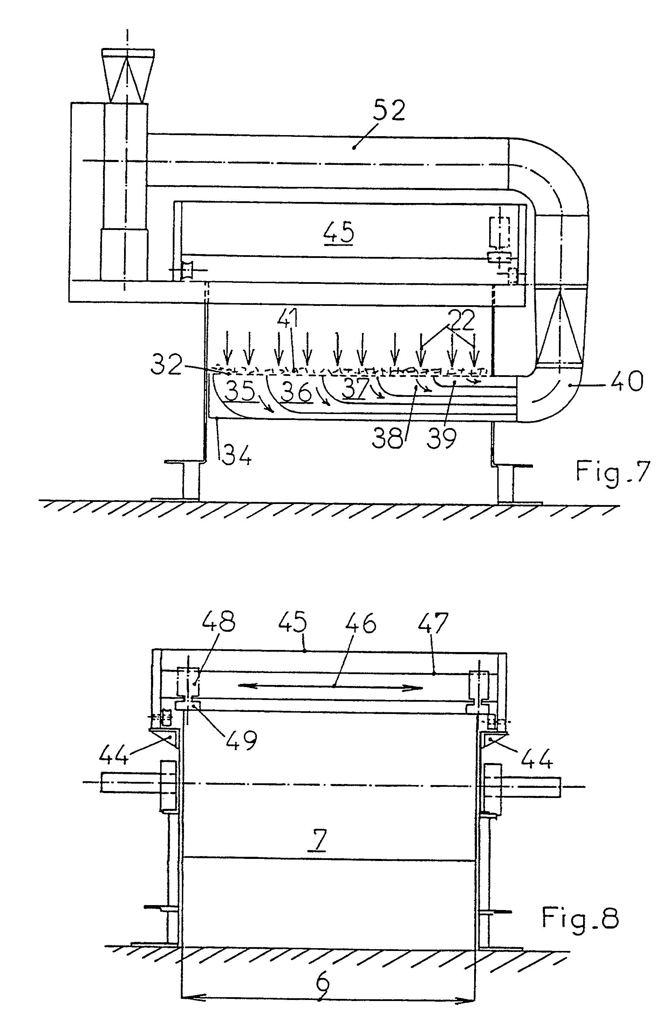

Dans chaque module 2, 3, 4, le tambour à pointes 7 est surmonté par une capote ou couvercle relevable 43 (figures 4 et 6). Quand ce couvercle 43 est relevé (figure 6), pendant l'arrêt de la machine, on peut procéder à l'aiguisage des pointes des tambours 7 correspondants. Pour cela, l'invention prévoit de part et d'autre de la partie supérieure de la machine, deux chemins de roulement longitudinaux 44, sur lesquels peuvent rouler les extrémités d'une traverse 45. Le long de cette traverse, c'est-à-dire transversalement par rapport à l'ensemble de la machine (flèche double 46 sur la figure 8), peut se déplacer sur une glissière 47, un affûteur 48 dont l'extrémité inférieure entraîne en rotation une meule boisseau 49, d'une type en lui-même connu. Ainsi, quand la traverse ou passerelle d'affûtage 45 est arrêtée au-dessus d'un tambour 7, il suffit de la déplacer alternativement le long de la glissière 47, pour affûter toutes les pointes du tambour 7 situé sur la génératrice correspondante. Une rotation du tambour 7 permet ainsi d'affûter la totalité de ces pointes. Grâce à ce dispositif, on voit qu'une seule passerelle d'affûtage 45 permet d'affûter les pointes de tous les tambours 7 de la machine. En ce qui concerne le poste d'alimentation automatique 1, des moyens sont prévus pour régler à volonté, à la fois en amplitude et en fréquence, les battements de la paroi 11, et éventuellement de la paroi 10. Cela permet d'assurer un bon écoulement de la masse des déchets 16, et d'obtenir une densité régulière à la partie inférieure du couloir, avant le transfert (flèche 15) vers le dispositif d'alimentation de l'effilocheuse, ouvreuse, défibreuse, ou analogue.

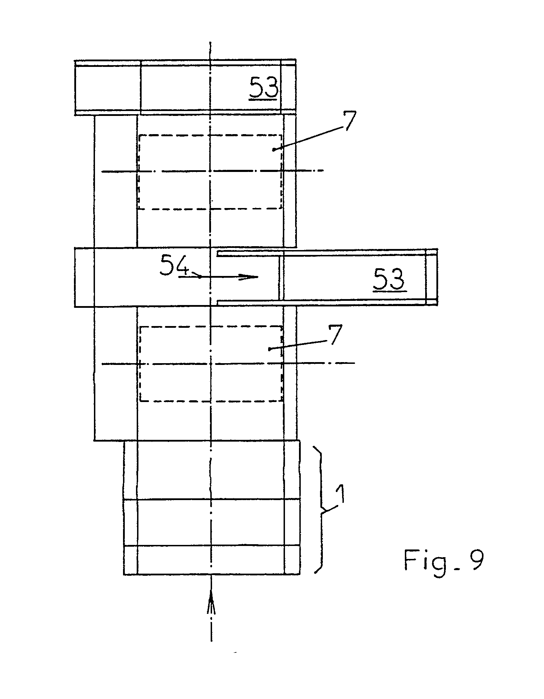

Dans ces conditions, l'aspiration 50 y compris les canalisations pneumatiques 51 et 52, forme avec l'ensemble de la trémie 34, de la bande perforée 32 et de ses organes de support 33 ou d'entraînement, un bloc 53 qu'on peut sortir, à la façon d'un tiroir, par coulissement latéral (voir figure 9, flèche 54). On comprend que cela facilite considérablement les opérations d'entretien de la machine.

## Revendications

1. Machine effilocheuse, présentant un tambour rotatif à pointes (7) qui s'étend sur toute la largeur de la machine, caractérisée en ce que l'alimentation du tambour effilocheur (7) est assurée par un poste (1) à fonctionnement automatique, comprenant une cheminée verticale (8) qui reçoit les déchets (16) à ouvrir, et dans laquelle ces déchets sont maintenus à la hauteur d'un niveau sensiblement constant, cependant que l'une au moins des parois (10), (11) de la cheminée entre lesquelles descendent les déchets, est réalisée suivant un montage vibrant.

2. Machine effilocheuse suivant la revendication 1, caractérisée en ce que la paroi vibrante (10) (11) de la cheminée d'alimentation (8) s'étend sur sensiblement toute la largeur (6) de la machine, et effectue des battements dont l'amplitude et la fréquence sont réglables.

3. Machine effilocheuse suivant l'une quelconque des revendications précédents, caractérisée en ce que les parois transversales et sensiblement verticales (10) (11) de la cheminée d'alimentation (8) sont toutes deux réalisées sous forme vibrante.

4. Machine effilocheuse suivant l'une quelconque des revendication précédentes, caractérisée en ce que l'une au moins (11) de ces parois vibrantes comporte des perforations qui la rendent perméable à l'air, ce qui permet d'y recycler les déchets fibreux récupérés plus en aval dans la machine et acheminés par transport pneumatique (27), (31), et d'envoyer l'air à l'extracteur.

5. Machine effilocheuse suivant la revendication 4, caractérisée en ce que le transport pneumatique (27), (28), (31), (12) qui assure le recyclage des déchets de récupération, possède un séparateur centrifuge (29) à la partie inférieure duquel sont recueillis les déchets durs et lourds (flèche (30), alors que, de sa partie supérieure, un flux d'air (31), (12) achemine vers la partie supérieure de la cheminée alimentaire (8), l'ensemble des fibres légères réutilisables.

6. Machine effilocheuse suivant l'une quelconque des revendications précédentes, caractérisée en ce qu'elle comporte, en aval du tambour rotatif à pointes (7), une bande transporteuse (32) à perforations mulitples, sous laquelle est prévue, sur toute la largeur de la nappe (41),une trémie d'aspiration (34), dont l'espace intérieur est fractionné en plusieurs compartiments d'aspiration (35), (36), (37), (38), (39), répartis suivant la largeur (6) de la machine, ce qui permet d'assurer sur toute la largeur de la machine (6), l'homogénéité de la nappe (41) des fibres ainsi produites, aussi bien en épaisseur qu'en densité.

7. Machine effilocheuse suivant l'une quelconque des revendications précédentes, caractérisée en ce qu'elle comporte, au-dessus du tambour rotatif à pointes (7), une passerelle transversale (45), le long de laquelle peut se déplacer, dans un sens et dans l'autre (flèche double (46), un mécanisme d'affûtage, constitué par un affûteur (48) à meule rotative (49) en forme de boisseau, pour affûter les dents du tambour (7), sur toute la longueur de celui-ci.

8. Machine effilocheuse suivant l'une quelconque des revendication précédentes, caractérisée en ce qu'elle est réalisée sous une forme modulaire, c'est-à-dire que la nappe (41) des fibres circule en traversant successivement plusieurs modules (2), (3), (4), dont chacun comporte un cylindre effilocheur (7) et ses accessoires précités.

9. Machine effilocheuse suivant la revendication 8, caractérisée en ce que, réalisée sous forme modulaire, elle comporte deux chemins de roulement longitudinaux (44), sur lesquels peut se déplacer la traverse d'affûtage (45), si bien que celle-ci peut être amenée successivement au-dessus de chacun des tambours rotatifs à pointes (7) dont elle assure l'affûtage.

10. Machine effilocheuse suivant l'une quelconque des revendications précédentes, caractérisée en ce que chaque bande perforée (32) et sa trémie d'aspiration (34) est groupeé avec tous ses accessoires de guidage (33), d'entraînement ou d'aspiration (50) pour former un bloc d'ensemble (53) qu'on peut sortir à la façon d'un tiroir, par coulissement latéral (flèche (54), notamment pour les opérations d'entretien de la machine.

## Patentansprüche

1. Reißmaschine mit über die gesamte Maschinenbreite rotierender Reißtrommel (7), dadurch gekennzeichnet, daß die Beschickung der Reißtrommel (7) über eine automatisch betriebene Anlage (1) erfolgt, bestehend aus einem senkrechten Schacht (8) zur Aufnahme der zu öffnenden Abfälle (16), in dem die Abfälle auf weitgehend konstanten Füllniveau gehalten werden, während mindestens eine der Wände (10, 11) des Schachtes, zwischen denen die Abfälle abwärts befördert werden, mit einer Vibrationsvorrichtung versehen ist.

2. Reißmaschine nach Patentanspruch 1, dadurch gekennzeichnet, daß die vibrierende Wand (10) des Förderschachtes (8) sich weitgehend über die ganze Breite (6) der Maschine erstreckt und Vibrationsbewegungen auslöst, deren Stärke und Häufigkeit einstellbar sind.

3. Reißmaschine nach einem der vorhergebenden Patentansprüche, dadurch gekennzeichnet, daß die beiden weitgehend senkrechten Querwände (10, 11) des Förderschachtes (8) vibirierend ausgeführt sind.

4. Reißmaschine nach einem der vorhergehenden Patentansprüche, dadurch gekennzeichnet, daß mindestens eine der vibrierenden Wände (11) Öffnungen enthält, sodaß sie luftdurchlässig ist, wodurch die Möglichkeit besteht, Abfallfasern zurückzuführen, die weiter unten in der Maschine aufgesammelt und durch Druckluftleitungen (27, 31) transportiert werden, sowie die Luft zur Auswurfvorrichtung zu leiten.

5. Reißmaschine nach Patentanspruch 4, dadurch gekennzeichnet, daß der Drucklufttransport (27, 28, 31, 12) zur Rückführung der wiederzuverwendenden Abfälle mit einem Zentrifugalseparator (29) ausgestattet ist, in dessen Zentrum die harten und schweren Abfallteile (Pfeil (30)) angesammelt werden, während ein Luftstrom (31, 12) in seinem oberen Teil die wiederverwendbaren leichteren Fasern in den oberen Teil des Förderschachtes bläst.

6. Reißmaschine nach einem der vorhergehenden Patentansprüche, dadurch gekennzeichnet, daß sie hinter der rotierenden Reißtrommel (7) ein Förderband (32) mit zahlreichen Perforationen besitzt, unter dem über die ganze Bandbreite (41) ein Ansaugtrichter (34) angebracht ist, dessen Innenfläche in mehrere, je nach Breite (6) der Maschine verteilte Ansaugfächer (35, 36, 37, 38, 39),aufgeteilt ist, wodurch über die ganze Breite (6) der Maschine die einheitliche Verteilung der erzeugten Faserschicht (41) sowohl der Stärke als auch der Dichte nach gewährleistet wird.

7. Reißmaschine nach einem der vorhergehenden Patentansprüche, dadurch gekennzeichnet, daß sie über der rotierenden Reißtrommel (7) eine Brücke (45) besitzt, auf der sich eine aus einem Schleifer (48) mit rotierendem, kegelförmigem Schleifstein (49) bestehende Schleifvorrichtung (48), in beiden Richtungen (Doppelpfeil (46)) hin und her bewegt, um die Reißzähne der Trommel (7) über deren gesamte Länge zu schärfen.

8. Reißmaschine nach einem der vorhergehenden Patentansprüche, dadurch gekennzeichnet, daß sie modular zusammengesetzt ist, das heißt, daß die Faserschicht (41) nacheinander mehrere Module (2, 3, 4) durchläuft, von denen jeder eine Reißtrommel (7) mit den vorgenannten Zusatzteilen besitzt.

9. Reißmaschine nach Patentanspruch 8, dadurch gekennzeichnet, daß sie bei modularer Zusammensetzung zwei Förderbahnen (44) in längsrichtung besitzt, wobei sich die Brücke (45) mit der Schleifvorrichtung abwechselnd über die eine oder andere Reißtrommel verlagern läßt, um deren Reißzähne zu schärfen.

10. Reißmaschine nach einem der vorhergehenden Patentansprüche, dadurch gekennzeichnet, daß jedes perforierte Förderband (32) mit seinem entsprechenden Ansaugtrichter (34) mit allen zugehörigen Teilen für Führung (33), Antrieb und Ansaugen (50) zu einer Baugruppe (53) vereint ist, die insbesondere für Wartungsarbeiten an der Maschine einschubartig seitlich herausgezogen werden kann (Pfeil (54)).

## Claims

1. Tearing machine having a rotating willowing drum (7) extending over the entire width of the machine, wherein the feeding of the willowing drum (7) is ensured by an automatic operational station (1) including a vertical chimney (8) which receives the waste (16) to be unravelled and in which this waste is kept at the height of a roughly constant level whilst at least one of the walls (10), (11) of the chimney between which this waste comes down is embodied according to a vibrating assembly.

2. Tearing machine according to claim 1, wherein the vibrating wall (10), (11) of the feeding chimney (8) extends approximately over the entire width (6) of the machine and carries out beatings whose amplitude and frequency are adjustable.

3. Tearing machine according to any one of the preceding claims, wherein the transversal and approximately vertical walls (10) (11) of the feeding chimney (8) are all embodied in a vibrating form.

4. Tearing machine according to any one of the preceding claims, wherein at least one (11) of these vibrating walls comprise perforations rendering it permeable to air which makes it possible to recycle there the fibrous waste recovered more downstream in the machine and routed via a pneumatic carrier (27), (31) and send the air to the extractor.

5. Tearing machine according to claim 4, wherein the pneumatic carrier (27), (28), (31), (12) ensuring recycling of the waste recovered has a centrifugal separator (29), the hard and heavy waste being collected at the lower section of this separator (arrow (30)), whereas, from its upper section, a flow of air (31), (12) directs towards the upper section of the feeding chimney (8) all the light reusable fibers.

6. Tearing machine according to any one of the preceding claims, wherein it comprises downstream of the willowing drum (7) a belt conveyor (32) with multiple perforations and under which over the entire width of the lap (41) a suction hopper (34) is provided whose internal space is divided into several suction compartments (35), (36), (37), (38), (39) distributed along the width (6) of the machine making it possible to ensure over the entire width of the machine (6) homogeneity of the lap (41) of the fibers thus produced, both as regards its thickness and density.

7. Tearing machine according to any one of the preceding claims, wherein it comprises above the rotary willowing drum (7) a transversal platform (45) along which in either direction (double arrow (46)) a grinding mechanism is able to move constituted by a grinder (48) with a chimney block-shaped rotary grinding wheel (49) so as to grind the teeth of the drum (7) over the entire length of the latter.

8. Tearing machine according to any one of the preceding claims, wherein it is embodied in a modular form, in other words the lap (41) of the fibers circulates by successively traversing several modules (2), (3), (4), each comprising a tearing cylinder (7) and its aforesaid accessories.

9. Tearing machine according to claim 8, wherein it comprises embodied in modular form two longitudinal runways (44) on which the grinding crosspiece (45) is able to move with the result that the latter can be successively brought above each of the rotary willowing drums (7) ensuring its grinding.

10. Tearing machine according to any one the preceding claims, wherein each perforated belt (32) and its suction hopper (34) are grouped with all its guiding (33), drive or suction (50) accessories so as to form an assembly block (53) able to come out like a drawer by means of lateral sliding (arrow (54)), especially for machine maintenance operations.

# Fig.1

Fig. 2

Fig. 3

Fig. 4

Fig.5

Fig.6

Fig.7

Fig.8

Fig. 9